# EUROPEAN PATENT APPLICATION

(11) **EP 4 432 429 A1**
(43) Date of publication of application: **18.09.2024**
(21) Application number: 22892590.5
(22) Date of filing: 26.10.2022
(51) Int. Cl.: H01M 50/105, H01G 11/78, H01G 11/80, H01M 50/117, H01M 50/121, H01M 50/122, H01M 50/129, H01M 50/133

(54) **EXTERIOR MATERIAL FOR POWER STORAGE DEVICE, AND POWER STORAGE DEVICE**

(30) Priority: 11.11.2021 JP 2021183860
(71) Applicant: Resonac Packaging Corporation, Shiga 529-1156 (JP)
(72) Inventor: KODA Naoya, Tokyo 105-8518 (JP); YOSHINO Kenji, Hikone-shi, Shiga 529-1156 (JP); NAKAJIMA Daisuke, Hikone-shi, Shiga 529-1156 (JP)
(74) Representative: Hoffmann Eitle
(86) International application number: PCT/JP2022/039897
(87) International publication number: WO 2023/085090

(57) **Abstract**

A packaging material for a power storage device with excellent moldability is provided. The present invention is directed to a packaging material for a power storage device. The packaging material includes a metal foil layer 4, a substrate layer 2 made of a resin and provided on the outer side of the metal foil layer 4, an adhesive layer 5 provided on the inner side of the metal foil layer 4, and a heat-fusible layer 3 made of heat-fusible resin and provided on the inner side of the adhesive layer 5. The heat-fusible layer 3 includes a metal foil side layer portion 33 bonded to the adhesive layer 5 and a seal layer portion 31 located on the innermost surface. Particles with an average particle diameter of 0.05 µm or more but less than 5 µm are defined as "micro particles," and particles with an average particle size of 5 µm or more but less than 20 µm are defined as "coarse particles." The seal layer portion 31 is composed of a layer containing the micro particles and the coarse particles, and the metal foil side layer portion 31 is composed of a constituent layer that contains the micro particles but does not contain particles with an actual particle size of 5 µm or larger.

## Description

### Technical Field

The present invention relates to a packaging material for a storage device, such as batteries and capacitors, used in mobile devices such as smartphones and tablet terminals, as well as batteries and capacitors, used in hybrid vehicles, electric vehicles, wind power generation, solar power generation, and for night-time electricity storage.

### Background Technology

In recent years, as mobile devices such as smartphones and tablet terminals have become thinner and lighter, a packaging material for a power storage device, such as lithium-ion secondary batteries, lithium polymer secondary batteries, lithium-ion capacitors, and electric double layer capacitors which are mounted in these devices, has been shifted from a conventional metal can to a laminate composed of a heat-resistant resin layer (substrate layer) / metal foil layer (barrier layer) / thermoplastic resin layer (heat-fusible layer). Further, there is a growing trend for power supplies for electric vehicles, large power supplies for energy storage applications, capacitors, and similar devices to be packaged in laminates (packaging materials) of the above-described configuration. In forming a packaging material for a power storage device, the laminate is shaped into a three-dimensional shape, such as an approximately rectangular solid shape, by cold forming methods such as stretch forming or deep drawing. By molding the laminate into such a three-dimensional shape, a housing space can be secured to accommodate a power storage device main body. Therefore, to ensure a highly accurate housing space, it is desirable to improve moldability.

For example, the packaging material for a power storage device described in Patent Document 1 listed below improves moldability by adding a lubricant to the exposed surface of the inner layer (the heat-fusible layer) to enhance slipperiness.

Also, the packaging material for a power storage device described in Patent Document 2 listed below ensures good moldability by moderately adjusting the center line average roughness (Ra) through phase separation of the exposed surface of the heat-fusible layer, or by adding fine particles to the layer of the exposed surface.

### Prior Art Document

### Patent Document

Patent Document 1: Japanese Patent No. 3774163
Patent Document 2: Japanese Patent No. 5380762

### SUMMARY OF THE INVENTION

### Problems to be Solved by the Invention

However, in the conventional packaging material for a power storage device described in Patent Document 1 listed above, the layer of the exposed surface to which a lubricant is added is a surface layer prone to transfer. Therefore, the amount of the lubricant can change during use, leading to variations in slipperiness, which prevents the achievement of consistently good moldability. In addition, in the areas where molding portions are formed at angles close to right angles, such as in the corners, delamination is prone to occur, making it difficult to achieve good moldability from this aspect.

In the conventional packaging material for a power storage device described in Patent Document 2, although unevenness (undulation) is required over a wide range of the exposed surface, merely adjusting the center line average roughness (Ra) may improve slipperiness in certain areas. However, it fails to provide consistent slipperiness across the entire area, thus preventing the achievement of stable and good moldability.

Some preferred embodiments of the present invention have been made in view of the above-described and/or other problems in the related art. Some preferred embodiments of the present invention can significantly improve existing methods and/or equipment.

The present invention has been made in view of the above problems, and the purpose of the present invention is to provide a packaging material for a power storage device capable of obtaining stable and good moldability and a power storage device.

Other objects and advantages of the present invention will be apparent from the following preferred embodiments.

### Means for Solving the Problems

In order to solve the above problems, the present invention is provided with the following means.
[1] A packaging material for a power storage device, comprising:
   a metal foil layer;
   a substrate layer made of resin, the substrate layer being provided on an outer side of the metal foil layer;
   an adhesive layer provided on an inner surface side of the metal foil layer; and
   a heat-fusible layer made of heat-fusible resin, the heat-fusible layer being provided on an inner surface side of the adhesive layer,
   wherein the heat-fusible layer includes a metal foil side layer portion adhered to the adhesive layer and a seal layer portion arranged on an innermost surface,
   wherein when particles with an average particle size of 0.05 µm or more and less than 5 µm are defined as "micro particles," and particles with an average particle size of 5 µm or more and 20 µm or less are defined as "coarse particles," the seal layer portion is configured by a layer containing the micro particles and the coarse particles, and
   wherein the metal foil side layer portion is configured by a layer that contains the micro particles and does not contain particles with an actual particle size of 5 µm or more.
[2] The packaging material for a power storage as recited in the above-described Item 1,
   wherein the seal layer portion is 5 µm or more in thickness.
[3] The packaging material for a power storage as recited in the above-described Item 1 or 2,
   wherein the seal layer portion is 200 ppm to 5,000 ppm in content of coarse particles and 500 ppm to 3,500 ppm in content of micro particles.
[4] The packaging material for a power storage as recited in any one of the above-described Items 1 to 3,
   wherein the metal foil side layer portion is 500 ppm to 3,500 ppm in content of the micro particles.
[5] The packaging material for a power storage as recited in any one of the above-described Items 1 to 4,
   wherein the seal layer portion contains a lubricant.
[6] The packaging material for a power storage as recited in any one of the above-described Items 1 to 5,
   wherein the coarse particles are composed of resin beads, and the micro particles are composed of any one or more of silicon oxide, aluminum oxide, and titanium oxide.
[7] A power storage device comprising:
   a power storage device main body; and
   the packaging material for a power storage as recited in any one of the above-described Items 1 to 6,
   wherein the power storage device main body is packaged with the packaging material.

### Effects of the Invention

According to the packaging material for a power storage device of the present invention [1], because coarse particles and micro particles, which are different in particle sizes, are added to the seal layer portion on the inner surface side of the heat-fusible layer, uneven surfaces of various sizes are formed on the inner surface. Through the synergistic effect of these varied uneven surfaces, it is possible to reduce the contact area with molding jigs, such as a molding die, and improve slipperiness against the molding jig, thereby enabling stable and favorable molding characteristics, such as being moldable to sufficient depths. Furthermore, since the heat-fusible layer does not contain large particles in the metal foil side layer portion on the metal foil layer side, contact with the adhesive layer is not inhibited by these large particles. Additionally, as the surface is adequately roughened by micro particles, the contact area with the adhesive layer increases, thereby enhancing adhesiveness and reliably preventing the occurrence of delamination.

According to the packaging material for a power storage device of the invention [2], coarse particles and micro particles can be securely retained in the seal layer portion. Therefore, stable and favorable moldability can be ensured more assuredly.

According to the packaging material for a power storage device of the invention [3], since the seal layer portion contains a predetermined amount of coarse particles and micro particles, stable and favorable moldability can be achieved even more assuredly.

According to the packaging material for a power storage device of the invention [4], since the metal foil side layer contains a predetermined amount of micro particles, it is possible to suppress the occurrence of delamination even more assuredly.

According to the packaging material for a power storage device of the invention [5], since the seal layer portion contains a lubricant, slipperiness against the molding jig can be further improved, thereby further enhancing moldability.

According to the packaging material for a power storage device of the invention [6], the above effects can be achieved even more assuredly.

According to the invention [7], since the above packaging material has excellent slipperiness to the molding jig and adhesiveness to the adhesive layer, a high-quality power storage device with high operational reliability can be provided.

### BRIEF DESCRIPTION OF THE DRAWINGS

FIG. 1 is a cross-sectional view showing a packaging material for a power storage device according to an embodiment of the present invention.
FIG. 2 is a schematic cross-sectional view for explaining a heat-fusible layer of a packaging material for a power storage device according to the embodiment.
FIG. 3 is a schematic cross-sectional view for explaining a seal layer portion where a lubricant is deposited in the heat-fusible layer of the embodiment.
FIG. 4 is a cross-sectional view showing a power storage device produced using a packaging material of the embodiment.
FIG. 5 is an exploded perspective view showing the power storage device of the embodiment.

### EMBODIMENTS FOR CARRYING OUT THE INVENTION

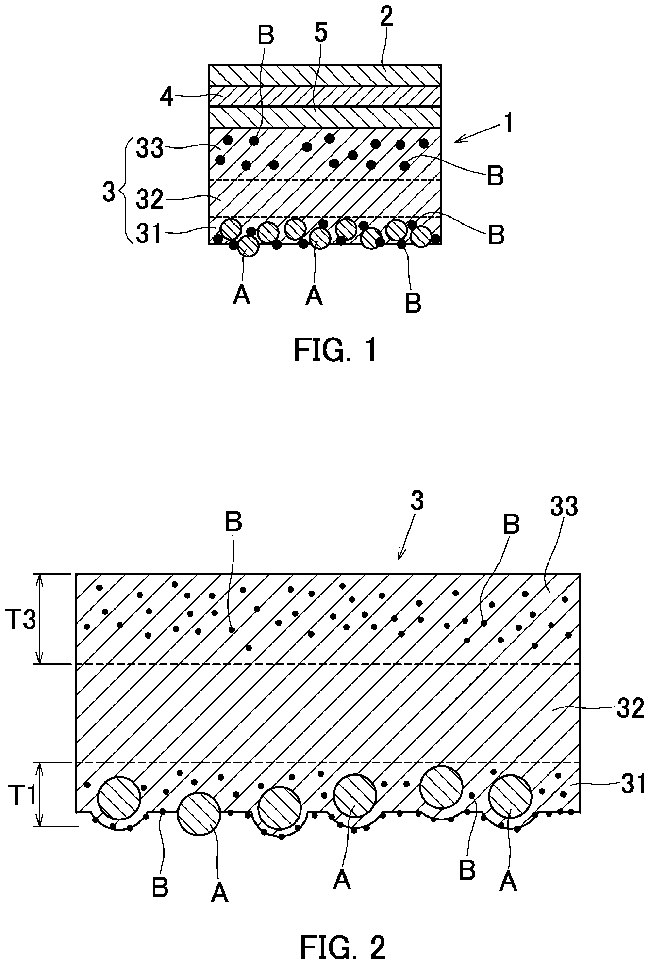

FIG. 1 is a cross-sectional view showing a packaging material for a power storage device according to an embodiment of the present invention. As shown in FIG. 1, this packaging material 1 for a power storage device is provided with a metal foil layer 4 formed of a metal foil, a substrate layer 2 made of a heat-resistant resin located on the outer surface side of the metal foil layer 4 to serve as the outer layer, an adhesive layer 5 provided on the inner surface side of the metal foil layer 4, and a heat-fusible resin layer (sealant layer) 3 provided on the inner surface side of the adhesive layer 5 and made of a heat-fusion resin as an inner layer.

Here in this embodiment, in the packaging material 1, in a state of the packaging case 15 of the power storage device 30, the substrate layer 2 serves as the outer layer, and the heat-fusible layer 3 serves as the inner layer. In this embodiment, when explaining the orientation of each layer constituting the packaging material 1, the direction towards the substrate layer 2 is designated as the outer side, and the direction towards the heat-fusible layer 3 is designated as the inner side, aligning with the inner and outer directions of the packaging case 15.

For the substrate layer 2, it is preferable to use a heat-resistant resin, for example, a biaxially stretched polyamide film, a biaxially stretched polybutylene terephthalate (PBT) film, a biaxially stretched polyethylene terephthalate (PET) film, or a biaxially stretched polyethylene naphthalate (PEN) film. Among these, while the polyamide film is not specifically limited, a 6 nylon film, a 6,6 nylon film, and an MXD nylon film can be used preferably.

Further, as the heat-resistant resin constituting the substrate layer 2, a heat-resistant resin film that does not melt at the heat sealing temperature used to heat seal the packaging material 1 is used. Specifically, as the heat-resistant resin constituting the substrate layer 2, it is preferable to use a thermoplastic resin that is higher in temperature than the heat-fusible resin constituting the heat-fusible layer 3 by at least 10°C, more preferably at least 20°C.

Further, the thickness of the substrate layer 2 is preferably set to 9 µm to 50 µm. In other words, when adjusting the substrate layer 2 to this thickness, it is possible to secure sufficient strength as a packaging material 1 and reduce stress during forming processes, such as stretching and drawing, thereby further improving formability. A more preferred thickness of the substrate layer 2 is 9 µm to 30 µm. When the substrate layer 2 is composed of multiple layers, the total thickness is set to the above-described thickness. Further, when the substrate layer 2 is composed of multiple layers, the thickness of the adhesive layer to be bonded to the multiple layers is also included in the above thickness.

The substrate layer 2 may be formed of either a single layer or previously mentioned multiple layers. When forming with multiple layers, for example, multiple layers composed of a polyester film/ a polyamide film (such as multiple layers composed of a PET film/ a nylon film) can be exemplified.

Further, the substrate layer 2 is also a layer constituting the outer layer. As the layer constituting the outer layer, besides the substrate layer 2, a protective layer to be bonded to the outer side of the substrate layer 2, and an adhesive layer for bonding a layer constituting the outer layer can be exemplified.

As the metal foil layer 4, it is suitable to use either a single type of a metal foil, including an aluminum (Al) foil, a copper (Cu) foil, a stainless steel (SUS) foil, a titanium (Ti) foil, or a nickel (Ni) foil, or a clad material formed by bonding two or more types of metal foils. Among them, as the metal foil layer 4, an aluminum foil can be preferably used. In particular, an Al-Fe based alloy foil containing 0.7 mass% to 1.7 mass% of Fe exhibits excellent strength and ductility, thereby enabling good moldability.

The thickness of the metal foil layer 4 is preferably set to 20 µm to 150 µm. In other words, a thickness of 20 µm or more prevents pinholes from occurring during rolling when producing a metal foil, and a thickness of 150 µm or less reduces stress during forming, such as stretch forming and drawing, thereby improving moldability.

It is preferable to form an underlying layer on at least one of the inner or outer surfaces of the metal foil layer 4.

The underlying layer can be formed by applying a silane coupling agent or a chemical conversion treatment such as a chromate treatment.

The thickness of the underlying layer is preferably set to 0.01 µm to 1 µm.

By forming the underlying layer as described above, it is possible to improve the adhesive strength between the adhesive layer 5, which is provided at least on the inner surface of the metal foil layer 4, and the metal foil layer itself, thereby effectively preventing peeling of the adhesive layer 5. Further, with the application of a chemical conversion treatment, corrosion of the metal foil surface due to the contents (electrolyte of batteries, etc.) can be adequately prevented.

When forming the underlying layer by a chemical conversion treatment (chemical conversion coating), the chemical conversion coating may be selected in combination with the adhesive layer 5. For example, it is preferable to use a coating by a chromic acid treatment, a coating by a phosphoric acid chromate treatment, a coating by a phosphoric acid zinc treatment, a coating by a non-chromate treatment using zirconium or titanium as a Cr substitute metal component, or an oxide coating by a boehmite treatment.

On the outer surface of this metal foil layer 4, the above-described substrate layer 2 is adhered with an adhesive as necessary and laminated into an integral structure.

As the adhesives for bonding the substrate layer 2 to the metal foil layer 4, and for bonding between films in the case of forming the substrate layer 2 with multiple films, adhesives formed of two-part curing type adhesives, etc., can be suitably used. For example, it is possible to use a two-part curing type adhesive formed of a first liquid comprising one or more polyols selected from the group consisting of a polyurethane polyol, a polyester polyol, a polyether polyol, and a polyester urethane polyol, and a second liquid (curing agent) comprising isocyanate, etc.

The thickness of the adhesive layer formed by this adhesive is preferably set to 2 µm to 5 µm.

Even in cases where the above-described outer layer is composed of multiple layers (including in cases where the substrate layer is composed of multiple layers), it is preferable to use the same type of adhesive.

On the inner surface of the metal foil layer 4, a heat-fusible layer 5, which will be detailed later, is integrally laminated via the adhesive layer 5. In the present invention, the adhesive layer 5 does not necessarily have to be composed of an adhesive. It can also be formed by the heat lamination portion resulting from the direct bonding of the heat-fusible layer 5 to the metal foil layer 4 through thermal fusion (heat lamination).

When constructing the adhesive layer 5 with an adhesive, adhesives containing one or more of the following resins can be suitably used: a polyurethane-based resin, an acrylic-based resin, an epoxy resin, a polyolefin-based resin, an elastomer-based resin, a fluorine-based resin, and an acid-modified polypropylene resin. Among them, it is particularly preferable to use an adhesive composed of a polyurethane composite resin where acid-modified polyolefin serves as the main component.

The thickness of the adhesive layer 5 is preferably set to 2 µm to 5 µm.

As the thermoplastic resin film constituting the heat-fusible layer 3, it is preferable to use a film of polypropylene-based resins such as polyethylene, rPP (random polypropylene), bPP (block polypropylene), hPP (homopolypropylene), especially a non-stretched film like CPP (cast polypropylene) or IPP (inflated polypropylene).

FIG. 2 is a cross-sectional view showing the heat-fusible layer 3 in the packaging material 1 of this embodiment. As shown in FIG. 1 and FIG. 2, the heat-fusible layer 3 is divided into at least two layers, preferably three layers. That is, the inner surface layer (first layer) of the heat-fusible layer 3 is configured as a seal layer portion 31 heat-fused to other portions, and the outer surface layer (third layer) is configured as a metal foil side layer portion 33 bonded with the adhesive layer 5. Even more preferably, an intermediate layer portion (second layer) 32 is interposed between the seal layer portion 31 and the metal foil side layer portion 33.

The film constituting the heat-fusible layer 3 can be either a single-layer film made from one film or a laminated film (such as co-extruded products) made from multiple films. However, considering heat-sealability, delamination resistance, and insulation properties, it is preferable to form it by a laminated film. For example, in this embodiment, a three-layer co-extruded CPP film in which an rPP film is arranged on both sides of an hPP film or a bPP film can be suitably used. In this heat-fusible layer 3 made of a three-layer co-extruded CPP film, the intermediate hPP film or bPP film is configured as the intermediate layer portion 32, one of the rPP films on both sides (inside and outside) is configured as the seal layer portion 31, and the other rPP film on the other side is configured as the metal foil side layer portion 33.

In this embodiment, the seal layer portion (first layer) 31 in the heat-fusible layer 3 is constituted by a layer containing coarse particles A and micro particles B. The metal foil side layer portion (third layer) 33 is constituted by a layer containing micro particles B and not including particles with an actual particle size of 5 µm or more, such as coarse particles A.

Here, in this embodiment, the coarse particles A are particles with an average particle diameter of 5 µm to 20 µm.

The average particle diameter of the coarse particles A is preferably about half of the thickness of the seal layer 31. In other words, when this particle size is too large, it becomes easy to drop out of the seal layer 31, and the roughening effect cannot be achieved. Conversely, when the particle size is too small, it becomes buried within the seal layer 31, and the roughening effect cannot be achieved.

As the coarse particles A, metal oxides, resin beads, or the like, can be used. Specifically, suitable materials include silica, alumina, calcium carbonate, barium carbonate, titanium dioxide, aluminum silicate, talc, kaolin, acrylic resin beads, and polyethylene resin beads. Among them, as the coarse particles A, resin beads, such as acrylic resin beads and polyethylene resin beads, are particularly preferred.

Further, the micro particles B refer to particles with an average particle diameter of 0.05 µm or more and less than 5 µm (excluding 5 µm).

By adjusting the average particle diameter of the micro particles B within the above range, a suitable roughness can be formed on the surface of the coarse particles A. If the average particle diameter of the micro particles B is too large, there is a risk that they may detach, which is undesirable.

As the micro particles A, metal oxides, resin beads, or the like, can be used. Specifically, silica (SiO₂), alumina (Al₂O₃), calcium carbonate, barium carbonate, titanium oxide, aluminum silicate, talc, kaolin, acrylic resin beads, and polyethylene resin beads can be suitably used. Of these, as the micro particles B, it is more preferable to use metal oxides (including silica), such as especially silica, alumina, and titanium oxide.

The seal layer portion 31, containing coarse particles A and micro particles B, is arranged such that parts of the coarse particles A and micro particles B protrude inward (downward in FIG. 1 and FIG. 2) from the inner surface (the lower side in FIG. 1 and FIG. 2) of the resin components, such as an rPP film, and the inner surface of the seal layer portion 31 is formed with unevenness. In this embodiment, the average position of the unevenness height on the inner surface of the seal layer portion 31 is defined as the reference position of the inner surface of the seal layer portion 31, and the dimension between this reference position and the boundary position between the seal layer portion 31 and the intermediate layer portion 32 is defined as the thickness T1 of the seal layer portion 31. Note that in the case where the intermediate layer portion 32 is not provided, the thickness between the reference position on the inner side surface and the boundary position between the seal layer portion 31 and the metal foil side layer portion 33 becomes the thickness T1 of the seal layer portion 31.

In this embodiment, it is preferable to use a combination of resin beads, particularly PE beads, as the coarse particles A, and metal oxides, particularly silica, as the micro particles B. This is because the resin beads, even with a large particle size, adhere well to the heat-fusible resin (seal layer portion 31) and are unlikely to fall off, while the metal oxides as the micro particles B are retained on the surface of the protruding resin beads without falling off, due to their fine average particle diameter.

In this embodiment, it is preferable to set the thickness T1 of the seal layer portion 31 to 5 µm to 20 µm. In other words, if the thickness T1 is too thin, the coarse particles A and the micro particles B become more likely to easily drop off, and as will be described below, the effect of improving moldability by the coarse particles A and the micro particles B cannot be fully achieved, which is not desirable. Conversely, if the thickness T1 of the seal layer portion 31 is too thick, there is a risk that the coarse particles A may become buried within the seal layer portion 31, and the roughening effect of the unevenness may not be sufficiently achieved.

Further, it is preferable to set the content of the coarse particles A in the seal layer portion 31 to 500 ppm to 5,000 ppm in mass units. In other words, if the content of the coarse particles A is too low, the roughening effect cannot be fully achieved, and if it is too high, the surface can become excessively rough, leading to easy detachment, and overly smooth, potentially causing rolling issues and making handling difficult.

In this embodiment, it is preferable to set the thickness T3 of the metal foil side layer 33 to 5 µm to 20 µm. In other words, when set within this range, it is possible to reliably secure the metal foil side layer 33 containing the micro particles B, and, as previously mentioned, enhance the adhesion with the adhesive layer 5, thus adequately achieving the delamination suppression effect.

It is preferable to set the content of the micro particles B in both the seal layer portion 31 and the metal foil side layer portion 33 to 500 ppm to 3,500 ppm in mass units. In other words, if it deviates from this range, as will be described later, the delamination suppression effect of the inclusion of the micro particles B cannot be fully achieved, which is undesirable.

The intermediate layer portion 32 is preferably made of block polypropylene (bPP film). The intermediate layer portion 32 is preferably composed of a layer that does not contain particles with an average particle diameter of 5 µm or greater. In other words, by forming the intermediate layer portion 32 that does not include particles with large particle sizes, electrical insulating properties and impact resistance can be improved.

Further, in this embodiment, it is preferable to include a lubricant in the seal layer portion 31 of the heat-fusible layer 3.

As the lubricant, examples include saturated fatty acid amide, unsaturated fatty acid amide, substituted amide, methylol amide, saturated fatty acid bisamide, unsaturated fatty acid bisamide, fatty acid ester amide, and aromatic bisamide.

More specifically, examples of saturated fatty acid amides include lauric acid amide, palmitic acid amide, stearamide, behenic acid amide, and hydroxystearic acid amide.

Further, examples of unsaturated fatty acid amides include oleamide and erucamide.

Further, examples of substituted amides include N-oleoyl palmitamide, N-stearyl stearamide, N-stearyl oleamide, N-oleoyl stearamide, and N-stearyl erucamide.

Further, examples of methylolamides include methylol stearamide.

Further, examples of the saturated fatty acid bisamide include a methylene bissteare amide, an ethylene biscaprinate amide, an ethylenebislauric amide, an ethylene bisstearate amide, an ethylene bishydroxystearic acid amide, an ethylene bisbehenamide, a hexamethylene bisstearate amide, a hexamethylene bisbehenamide, a hexamethylene hydroxystearic acid amide, an N, N'-distearyl adipic acid amide, and an N, N'-distearyl sebacic acid amide.

Further, examples of the unsaturated fatty acid bisamide include an ethylene bisoleamide, an ethylene bis-erucamide, a hexamethylene bisoleamide, an N,N'-dioleoyl adipic acid amide, and an N,N'-dioleoyl sebacic acid amide.

Further, examples of fatty acid esteramides include stearamidoethylstearate.

Examples of the aromatic bisamide include an m-xylylene bistearic acid amide, an m-xylylene bis-hydroxystearic acid amide, and an N, N'-distearyl isophthalic acid amide.

The precipitation amount of the lubricant on the inner surface of the heat-fusible layer 3 is preferably adjusted to 0.1 µg/cm² to 1 µg/cm². If the precipitation amount of the lubricant is too small, good slipperiness may not be obtained, which is not desirable. Conversely, if the precipitation amount of the lubricant is excessive, there is a risk of increased occurrences of white powder formation and equipment contamination caused by the lubricant, which is undesirable. To adjust the precipitation amount of the lubricant in the seal layer portion 31 within the above specified range, the content of the lubricant is preferably set to 500 ppm to 5,000 ppm. This content is the amount that is included during the production of the film that forms the seal layer portion 31. This content amount decreases as time passes.

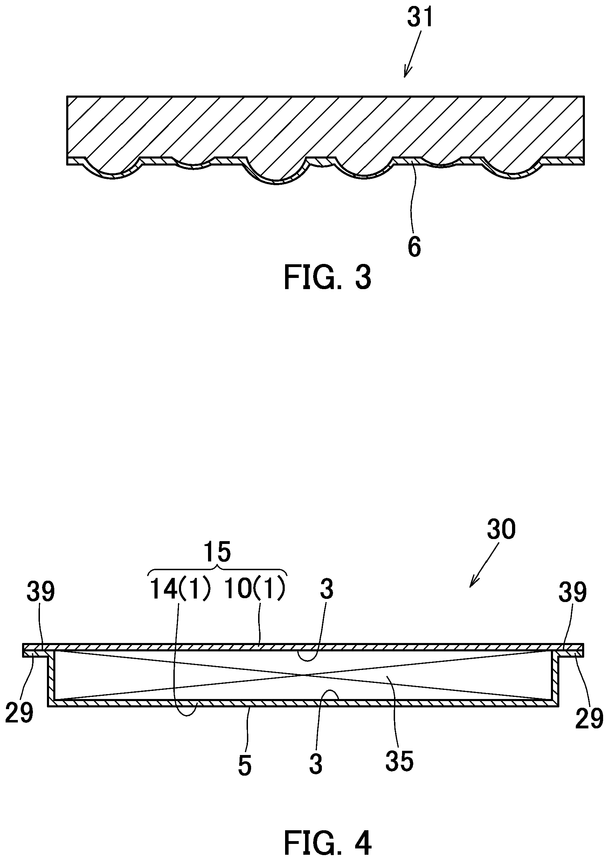

Note that, as shown in FIG. 3, the inner surface of the heat-fusible layer 3 is formed into an uneven structure by the coarse particles A and the micro particles B, which can prevent the excessive deposition of the lubricant on the inner surface of the heat-fusible layer 3, and allows the inner surface of the heat-fusible layer 3 to be coated by a lubricant layer 6 with an appropriate amount of lubricant, further enhancing slipperiness against the molding jig.

Additionally, when the heat-fusible layer 3 of the packaging material 1 of this embodiment is heat-fused to the other part, for example, a film, the convex positions formed by coarse particles A and micro particles B preferentially come into contact with the other part, thus allowing the transfer amount of the lubricant to the other part to be suppressed.

The packaging material for a power storage device, as configured above, is intended to be used as a packaging case for a power storage device, remaining as a sheet or, when required, being cold formed into a predetermined shape through deep drawing, stretch forming, or similar cold forming methods.

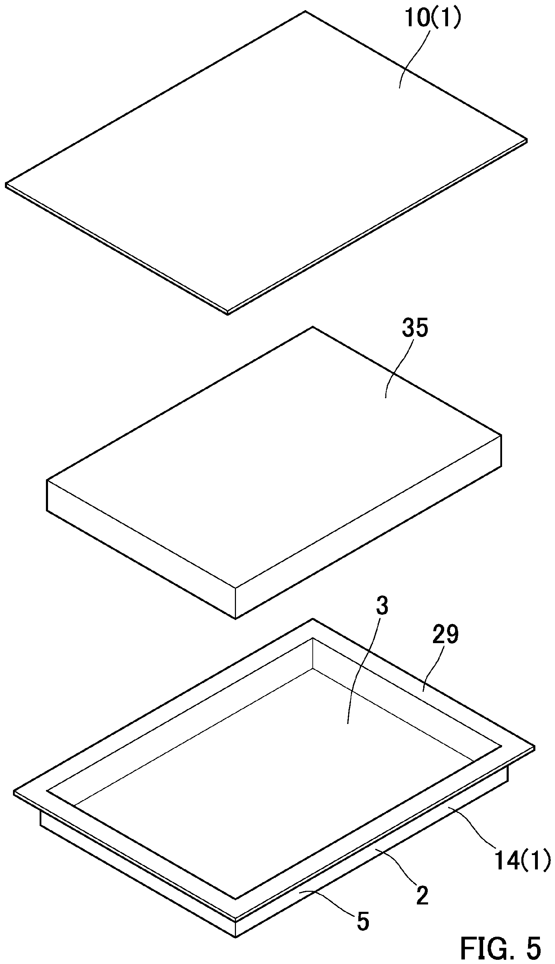

For example, FIG. 4 and FIG. 5 show a cross-sectional view and an exploded view, respectively, of the power storage device 30 produced using the packaging material 1 of this embodiment. As shown in both figures, this power storage device 30 is a lithium-ion secondary battery. In this embodiment, the packaging case 15 is composed of a tray member 14 formed by molding the packaging material 1 and a lid member 10 made of the flat (sheet) packaging material 1. A rectangular-shaped power storage device main body (electrochemical element, etc.) 31 (Translator's note: Correclty: 35) is housed within the recess of the tray member 14, which is formed by molding the packaging material 1 of the present invention. Above the power storage device main body 35, the lid member 10 (packaging material 1) of the present invention is positioned with the heat-fusible layer 3 side of the lid member 10 facing inward (downward). The outer peripheral edge portion of the heat-fusible layer 3 of the lid member 10 and the heat-sealed layer 3 of the flange portion (sealing peripheral edge portion) 29 of the tray member 14 are bonded and sealed by heat-sealing, thereby configuring the power storage device 30. Note that the inner surface of the housing recess of the tray member 14 is composed of the heat-fusible layer 3, and the outer surface of the housing recess is on the substrate layer 2 side.

In FIG. 4, the reference symbol "39" denotes a heat-sealed portion where the outer peripheral edge portion of the lid member 10 and the flange portion (sealing peripheral edge portion) 29 of the tray member 14 are joined (welded) together. Note that in the power storage device 30, the tip end portions of the tab leads connected to the power storage device main body 35 are led out of the packaging case 15, which is not illustrated.

The power storage device main body 35 is not specifically limited and can include, for example, a battery main body, a capacitor main body, a condenser main body, and the like.

Note that in the above embodiment, the packaging case 15 is composed of the tray member 14 formed by molding the packaging material 1 and the flat lid member 10, but the present invention is not particularly limited to such a combination. For example, the packaging case 15 could also be made from a pair of flat (sheet-like) packaging materials 1, or from a pair of tray members 14 arranged in a facing configuration and stacked together.

As described above, according to the packaging material 1 of this embodiment, the seal layer portion 31 on the inner side of the heat-fusible layer 3 contains two types of coarse particles A and micro particles B, which are different in particle size. As a result, the inner surface of the seal layer portion 31 exhibits a variety of concave-convex portions due to the coarse particles A and the micro particles B. The synergy effect of these uneven portions reduces the contact area with molding jigs, such as molding dies, enhancing slipperiness against the molding jigs. This facilitates deeper molding, yielding stable and superior moldability. Therefore, even in an area requiring molding at an angle close to a right angle, such as the corner of the molding unit, it is possible to achieve good moldability without occurrence of delamination.

Further, the heat-fusible layer 3 does not contain large particles with an actual particle size of 5 µm or larger in the metal foil side layer 33 on the adhesive layer 5 side. Therefore, the large particles do not interfere with the contact with the adhesive layer 5. Furthermore, the surface is moderately roughened by small particles, such as the micro particles B, thereby increasing the contact area with the adhesive layer 5 and improving adhesive properties with the adhesive layer 5. This reliably suppresses the occurrence of delamination.

Further, in the packaging material 1 of this embodiment, since a lubricant is contained on the inner side of the heat-fusible layer 3. Therefore, slipperiness to a molding jig, such as a molding die, can be further improved, and therefore stable and good moldability can be achieved more assuredly. This enables more stable production of a molded product of a desired shape.

Also, in the case of forming the heat-fusible layer 3 in the packaging material 1 of this embodiment by a film laminate composed of two or more films, the desired two-layer and three-layer structured heat-fusible layer 3 can be assuredly formed. This enables the assured production of the packaging material 1 of the present invention.

Further, the power storage device 30 produced using the packaging material 1 of this embodiment is low in the precipitation amount of the lubricant in the heat-fusible layer 3, which can suppress the adverse effects on the battery element. Therefore, the power storage device 30 can reliably perform charging and discharging, thereby improving operational reliability.

### EXAMPLES

**[Table 1]**

| | First layer (seal layer portion * rPP film | | | | | | | | |
|---|---|---|---|---|---|---|---|---|---|
| | Rough particles A | | | Micro particles B | | | | Lubricant *2 | Thickness |
| | Material | Average particle size | Addition amount | Material | Particle size (max) | Average particle size | Addition amount | Addition amount | |
| Ex. 1 | HDPE | 12 µm | 2000 ppm | Silica | 2 µm | 0.2 µm | 2000 ppm | 700 ppm | 8 µm |
| Ex. 2 | HDPE | 5 µm (Content rate of particles with a particle size of less than 5 µm is 50%) | 2000 ppm | Silica | 2 µm | 0.2 µm | 2000 ppm | 700 ppm | 8 µm |
| Ex. 3 | HDPE | 12 µm | 2000 ppm | Silica | 2 µm | 0.2 µm | 2000 ppm | 700 ppm | 8 µm |
| Ex. 4 | HDPE | 12 µm | 1200 ppm | Silica | 2 µm | 0.2 µm | 2000 ppm | 700 ppm | 8 µm |
| Ex. 5 | HDPE | 12 µm | 2000 ppm | Silica | 2 µm | 0.2 µm | 2000 ppm | 700 ppm | 8 µm |
| Ex. 6 | HDPE | 12 µm (Content rate of particles with a particle size of less than 5 µm is 50%) | 2000 ppm | Silica | 2 µm | 0.2 µm | 2000 ppm | 700 ppm | 8 µm |
| Ex. 7 | HDPE | 18 µm | 2000 ppm | Silica | 2 µm | 0.2 µm | 2000 ppm | 700 ppm | 8 µm |
| Ex. 8 | LLDPE | 5 µm (Content rate of particles less than 5 µm is 50%) | 2000 ppm | Silica | 2 µm | 0.2 µm | 2000 ppm | 700 ppm | 8 µm |
| Ex. 9 | HDPE | 12 µm | 2000 ppm | Silica | 3 µm | 0.5 µm | 2000 ppm | 700 ppm | 8 µm |
| Ex. 10 | HDPE | 12 µm | 2000 ppm | HDPE | 4 µm | 1 µm | 2000 ppm | 700 ppm | 8 µm |
| Ex. 11 | HDPE | 12 µm | 2000 ppm | LLDPE | 3 µm | 1 µm | 2000 ppm | 700 ppm | 8 µm |
| Ex. 12 | HDPE | 12 µm | 3500 ppm | Silica | 2 µm | 0.2 µm | 2000 ppm | 700 ppm | 8 µm |
| Ex. 13 | HDPE | 12 µm | 2000 ppm | Silica | 2 µm | 0.2 µm | 2000 ppm | 700 ppm | 8 µm |
| Ex. 14 | HDPE | 12 µm | 6000 ppm | Silica | 2 µm | 0.2 µm | 2000 ppm | 700 ppm | 8 µm |
| Ex. 15 | HDPE | 12 µm | 300 ppm | Silica | 2 µm | 0.2 µm | 2000 ppm | 700 ppm | 8 µm |
| Ex. 16 | HDPE | 12 µm | 3000 ppm | Silica | 2 µm | 0.2 µm | 3000 ppm | 700 ppm | 8 µm |
| Ex. 17 | HDPE | 12 µm | 1000 ppm | Silica | 2 µm | 0.2 µm | 1000 ppm | 700 ppm | 8 µm |
| Ex. 18 | HDPE | 12 µm | 2000 ppm | Silica | 2 µm | 0.2 µm | 4000 ppm | 700 ppm | 8 µm |
| Ex. 19 | HDPE | 12 µm | 2000 ppm | Silica | 2 µm | 0.2 µm | 2000 ppm | 700 ppm | 8 µm |
| Ex. 20 | Silica | 10 µm | 2000 ppm | Silica | 2 µm | 0.2 µm | 300 ppm | 700 ppm | 8 µm |
| Ex. 21 | Acrylic | 14 µm | 2000 ppm | Silica | 2 µm | 0.2 µm | 2000 ppm | 700 ppm | 8 µm |
| Ex. 22 | LLDPE | 12 µm | 2000 ppm | Silica | 2 µm | 0.2 µm | 2000 ppm | 700 ppm | 8 µm |
| Ex. 23 | HDPE | 12 µm | 2000 ppm | Silica | 5 µm | 2 µm | 2000 ppm | 700 ppm | 4 µm |
| Ex. 24 | HDPE | 12 µm | 2000 ppm | Silica | 2 µm | 0.2 µm | 2000 ppm | 700 ppm | 6 µm |
| Ex. 25 | HDPE | 12 µm | 2000 ppm | Silica | 2 µm | 0.2 µm | 2000 ppm | 700 ppm | 16 µm |
| Ex. 26 | HDPE | 12 µm | 2000 ppm | Silica | 2 µm | 0.2 µm | 2000 ppm | 700 ppm | 6 µm |
| Ex. 27 | HDPE | 12 µm | 2000 ppm | Silica | 2 µm | 0.2 µm | 2000 ppm | 700 ppm | 10 µm |
| Ex. 28 | HDPE | 12 µm | 2000 ppm | Silica | 2 µm | 0.2 µm | 2000 ppm | 700 ppm | 6 µm |
| Ex. 29 | HDPE | 12 µm | 2000 ppm | Silica | 2 µm | 0.2 µm | 2000 ppm | 700 ppm | 16 µm |
| Ex. 30 | HDPE | 12 µm | 2000 ppm | Silica | 2 µm | 0.2 µm | 2000 ppm | 2500 ppm | 8 µm |
| Ex. 31 | HDPE | 12 µm | 2000 ppm | Silica | 2 µm | 0.2 µm | 2000 ppm | 4000 ppm | 8 µm |
| Ex. 32 | HDPE | 12 µm | 2000 ppm | Silica | 2 µm | 0.2 µm | 2000 ppm | 100 ppm | 8 µm |
| Comp. Ex. 1 | - | - | - | Silica | 2 µm | 0.2 µm | 2000 ppm | 700 ppm | 8 µm |
| Comp. Ex. 2 | - | - | - | Silica | 2 µm | 0.2 µm | 2000 ppm | 700 ppm | 8 µm |
| Comp. Ex. 3 | HDPE | 12 µm | 2000 ppm | Silica | 4 µm *1 | 1 µm | 2000 ppm | 700 ppm | 8 µm |
| Comp. Ex. 4 | HDPE | 12 µm | 2000 ppm | Silica | 8 µm | 3 µm | 2000 ppm | 700 ppm | 8 µm |

| | | | | | | | | | |
|---|---|---|---|---|---|---|---|---|---|
| *1: Content rate of silica with a particle size of 5 µm or *2: Lubricant: Erucamide more is 2% | | | | | | | | | |

**[Table 2]**

| | Second layer (Intermediate layer portion *bPP film | | | | | | | | |
|---|---|---|---|---|---|---|---|---|---|
| | Rough particles A | | | Micro particles B | | | | Lubricant | Thickness |
| | Material | Average particle size | Addition amount | Material | Particle size (max) | Average particle size | Addition amount | Addition amount | |
| Ex. 1 | - | - | - | - | - | - | - | - | - |
| Ex. 2 | - | - | - | - | - | - | - | - | - |
| Ex. 3 | - | - | - | - | - | - | - | - | - |
| Ex. 4 | - | - | - | - | - | - | - | - | - |
| Ex. 5 | - | - | - | Silica | 2 µm | 0.2 µm | 2000 ppm | 700 ppm | 24 µm |
| Ex. 6 | - | - | - | Silica | 2 µm | 0.2 µm | 2000 ppm | 700 ppm | 24 µm |
| Ex. 7 | - | - | - | Silica | 2 µm | 0.2 µm | 2000 ppm | 700 ppm | 24 µm |
| Ex. 8 | - | - | - | Silica | 2 µm | 0.2 µm | 2000 ppm | 700 ppm | 24 µm |
| Ex. 9 | - | - | - | Silica | 3 µm | 0.2 µm | 2000 ppm | 700 ppm | 24 µm |
| Ex. 10 | - | - | - | Silica | 4 µm | 0.2 µm | 2000 ppm | 700 ppm | 24 µm |
| Ex. 11 | - | - | - | Silica | 3 µm | 0.2 µm | 2000 ppm | 700 ppm | 24 µm |
| Ex. 12 | - | - | - | Silica | 2 µm | 0.2 µm | 2000 ppm | 700 ppm | 24 µm |
| Ex. 13 | - | - | - | Silica | 2 µm | 0.2 µm | 2000 ppm | 700 ppm | 24 µm |
| Ex. 14 | - | - | - | Silica | 2 µm | 0.2 µm | 2000 ppm | 700 ppm | 24 µm |
| Ex. 15 | - | - | - | Silica | 2 µm | 0.2 µm | 2000 ppm | 700 ppm | 24 µm |
| Ex. 16 | - | - | - | Silica | 2 µm | 0.2 µm | 2000 ppm | 700 ppm | 24 µm |
| Ex. 17 | - | - | - | Silica | 2 µm | 0.2 µm | 2000 ppm | 700 ppm | 24 µm |
| Ex. 18 | - | - | - | Silica | 2 µm | 0.2 µm | 2000 ppm | 700 ppm | 24 µm |
| Ex. 19 | - | - | - | Silica | 2 µm | 0.2 µm | 2000 ppm | 700 ppm | 24 µm |
| Ex. 20 | - | - | - | Silica | 2 µm | 0.2 µm | 2000 ppm | 700 ppm | 24 µm |
| Ex. 21 | - | - | - | Silica | 2 µm | 0.2 µm | 2000 ppm | 700 ppm | 24 µm |
| Ex. 22 | - | - | - | Silica | 2 µm | 0.2 µm | 2000 ppm | 700 ppm | 24 µm |
| Ex. 23 | - | - | - | Silica | 2 µm | 0.2 µm | 2000 ppm | 700 ppm | 32 µm |
| Ex. 24 | - | - | - | Silica | 5 µm | 0.2 µm | 2000 ppm | 700 ppm | 28 µm |
| Ex. 25 | - | - | - | Silica | 2 µm | 0.2 µm | 2000 ppm | 700 ppm | 12 µm |
| Ex. 26 | HDPE | 10 µm | 2000 ppm | Silica | 2 µm | 0.2 µm | 2000 ppm | 700 ppm | 8 µm |
| Ex. 27 | HDPE | 10 µm | 2000 ppm | Silica | 2 µm | 0.2 µm | 2000 ppm | 700 ppm | 10 µm |
| Ex. 28 | - | - | - | Silica | 2 µm | 0.2 µm | 2000 ppm | 700 ppm | 22 µm |
| Ex. 29 | - | - | - | Silica | 2 µm | 0.2 µm | 2000 ppm | 700 ppm | 48 µm |
| Ex. 30 | - | - | - | Silica | 2 µm | 0.2 µm | 2000 ppm | 700 ppm | 24 µm |
| Ex. 31 | - | - | - | Silica | 2 µm | 0.2 µm | 2000 ppm | 700 ppm | 24 µm |
| Ex. 32 | - | - | - | Silica | 2 µm | 0.2 µm | 2000 ppm | 700 ppm | 24 µm |
| Comp. Ex. 1 | - | - | - | - | - | - | - | - | - |
| Comp. Ex. 2 | - | - | - | Silica | 2 µm | 0.2 µm | 2000 ppm | 700 ppm | 24 µm |
| Comp. Ex. 3 | - | - | - | Silica | 2 µm | 0.2 µm | 2000 ppm | 700 ppm | 24 µm |
| Comp. Ex. 4 | - | - | - | Silica | 2 µm | 0.2 µm | 2000 ppm | 700 ppm | 24 µm |

**[Table 3]**

| | Third layer (seal layer portion * rPP film) | | | | | | | | |
|---|---|---|---|---|---|---|---|---|---|
| | Rough particles A | | | Micro particles B | | | | Lubricant | Thickness |
| | Material | Average particle size | Addition amount | Material | Particle size (max) | Average particle size | Addition amount | Addition amount | |
| Ex. 1 | - | - | - | Silica | 2 µm | 0.2 µm | 2000 ppm | 700 ppm | 32 µm |
| Ex. 2 | - | - | - | Silica | 2 µm | 0.2 µm | 2000 ppm | 700 ppm | 32 µm |
| Ex. 3 | - | - | - | Silica | 2 µm | 0.2 µm | 2000 ppm | 700 ppm | 32 µm |
| Ex. 4 | - | - | - | Silica | 2 µm | 0.2 µm | 2000 ppm | 700 ppm | 32 µm |
| Ex. 5 | - | - | - | Silica | 2 µm | 0.2 µm | 2000 ppm | 700 ppm | 8 µm |
| Ex. 6 | - | - | - | Silica | 2 µm | 0.2 µm | 2000 ppm | 700 ppm | 8 µm |
| Ex. 7 | - | - | - | Silica | 2 µm | 0.2 µm | 2000 ppm | 700 ppm | 8 µm |
| Ex. 8 | - | - | - | Silica | 2 µm | 0.2 µm | 2000 ppm | 700 ppm | 8 µm |
| Ex. 9 | - | - | - | Silica | 3 µm | 0.5 µm | 2000 ppm | 700 ppm | 8 µm |
| Ex. 10 | - | - | - | HPDE | 4 µm | 1 µm | 2000 ppm | 700 ppm | 8 µm |
| Ex. 11 | - | - | - | LLDPE | 3 µm | 1 µm | 2000 ppm | 700 ppm | 8 µm |
| Ex. 12 | - | - | - | Silica | 2 µm | 0.2 µm | 2000 ppm | 700 ppm | 8 µm |
| Ex. 13 | - | - | - | Silica | 2 µm | 0.2 µm | 2000 ppm | 700 ppm | 8 µm |
| Ex. 14 | - | - | - | Silica | 2 µm | 0.2 µm | 2000 ppm | 700 ppm | 8 µm |
| Ex. 15 | - | - | - | Silica | 2 µm | 0.2 µm | 2000 ppm | 700 ppm | 8 µm |
| Ex. 16 | - | - | - | Silica | 2 µm | 0.2 µm | 3000 ppm | 700 ppm | 8 µm |
| Ex. 17 | - | - | - | Silica | 2 µm | 0.2 µm | 1000 ppm | 700 ppm | 8 µm |
| Ex. 18 | - | - | - | Silica | 2 µm | 0.2 µm | 4000 ppm | 700 ppm | 8 µm |
| Ex. 19 | - | - | - | Silica | 2 µm | 0.2 µm | 300 ppm | 700 ppm | 8 µm |
| Ex. 20 | - | - | - | Silica | 2 µm | 0.2 µm | 2000 ppm | 700 ppm | 8 µm |
| Ex. 21 | - | - | - | Silica | 2 µm | 0.2 µm | 2000 ppm | 700 ppm | 8 µm |
| Ex. 22 | - | - | - | Silica | 2 µm | 0.2 µm | 2000 ppm | 700 ppm | 8 µm |
| Ex. 23 | - | - | - | Silica | 2 µm | 0.2 µm | 2000 ppm | 700 ppm | 4 µm |
| Ex. 24 | - | - | - | Silica | 5 µm | 0.2 µm | 2000 ppm | 700 ppm | 6 µm |
| Ex. 25 | - | - | - | Silica | 2 µm | 0.2 µm | 2000 ppm | 700 ppm | 12 µm |
| Ex. 26 | - | - | - | Silica | 2 µm | 0.2 µm | 2000 ppm | 700 ppm | 26 µm |
| Ex. 27 | - | - | - | Silica | 2 µm | 0.2 µm | 2000 ppm | 700 ppm | 20 µm |
| Ex. 28 | - | - | - | Silica | 2 µm | 0.2 µm | 2000 ppm | 700 ppm | 6 µm |
| Ex. 29 | - | - | - | Silica | 2 µm | 0.2 µm | 2000 ppm | 700 ppm | 16 µm |
| Ex. 30 | - | - | - | Silica | 2 µm | 0.2 µm | 2000 ppm | 2500 ppm | 8 µm |
| Ex. 31 | - | - | - | Silica | 2 µm | 0.2 µm | 2000 ppm | 4000 ppm | 8 µm |
| Ex. 32 | - | - | - | Silica | 2 µm | 0.2 µm | 2000 ppm | 100 ppm | 8 µm |
| Comp. Ex. 1 | - | - | - | Silica | 2 µm | 0.2 µm | 2000 ppm | 700 ppm | 32 µm |
| Comp. Ex. 2 | - | - | - | Silica | 2 µm | 0.2 µm | 2000 ppm | 700 ppm | 8 µm |
| Comp. Ex. 3 | HDPE | 12 µm | 2000 ppm | Silica | 4 µm | 1 µm | 2000 ppm | 700 ppm | 8 µm |
| Comp. Ex. 4 | HDPE | 12 µm | 2000 ppm | Silica | 8 µm | 3 µm | 2000 ppm | 700 ppm | 8 µm |

**[Table 4]**

| | Inner side (seal layer portion) | | | Metal foil layer side (laminate layer portion) | | |
|---|---|---|---|---|---|---|
| | Average amount within a thickness of 0 to 5 µm from the inner surface | | | Average amount within a thickness of 0 to 25 µm from the adhesive surface (outer surface) | | |
| | Particle (5 µm or more) | Particle (less than 5 µm) | Lubricant | Particle (5 µm or more) | Particle (less than 5 µm) | Lubricant |
| Ex. 1 | 2000 ppm | 2000 ppm | 700 ppm | 0 | 2000 ppm | 700 ppm |
| Ex. 2 | 1000 ppm | 3000 ppm (1000+2000) | 700 ppm | 0 | 2000 ppm | 700 ppm |
| Ex. 3 | 3500 ppm | 2000 ppm | 700 ppm | 0 | 2000 ppm | 700 ppm |
| Ex. 4 | 1200 ppm | 2000 ppm | 700 ppm | 0 | 2000 ppm | 700 ppm |
| Ex. 5 | 2000 ppm | 2000 ppm | 700 ppm | 0 | 2000 ppm | 700 ppm |
| Ex. 6 | 1000 ppm | 3000 ppm (1000+2000) | 700 ppm | 0 | 2000 ppm | 700 ppm |
| Ex. 7 | 2000 ppm | 2000 ppm | 700 ppm | 0 | 2000 ppm | 700 ppm |
| Ex. 8 | 1000 ppm | 3000 ppm (1000+2000) | 700 ppm | 0 | 2000 ppm | 700 ppm |
| Ex. 9 | 2000 ppm | 2000 ppm | 700 ppm | 0 | 2000 ppm | 700 ppm |
| Ex. 10 | 2000 ppm | 2000 ppm | 700 ppm | 0 | 2000 ppm | 700 ppm |
| Ex. 11 | 2000 ppm | 2000 ppm | 700 ppm | 0 | 2000 ppm | 700 ppm |
| Ex. 12 | 3500 ppm | 2000 ppm | 700 ppm | 0 | 2000 ppm | 700 ppm |
| Ex. 13 | 1200 ppm | 2000 ppm | 700 ppm | 0 | 2000 ppm | 700 ppm |
| Ex. 14 | 6000 ppm | 2000 ppm | 700 ppm | 0 | 2000 ppm | 700 ppm |
| Ex. 15 | 300 ppm | 2000 ppm | 700 ppm | 0 | 2000 ppm | 700 ppm |
| Ex. 16 | 3000 ppm | 3000 ppm | 700 ppm | 0 | 3000 ppm | 700 ppm |
| Ex. 17 | 1000 ppm | 1000 ppm | 700 ppm | 0 | 1000 ppm | 700 ppm |
| Ex. 18 | 2000 ppm | 4000 ppm | 700 ppm | 0 | 4000 ppm | 700 ppm |
| Ex. 19 | 2000 ppm | 300 ppm | 700 ppm | 0 | 300 ppm | 700 ppm |
| Ex. 20 | 2000 ppm | 2000 ppm | 700 ppm | 0 | 2000 ppm | 700 ppm |
| Ex. 21 | 2000 ppm | 2000 ppm | 700 ppm | 0 | 2000 ppm | 700 ppm |
| Ex. 22 | 2000 ppm | 2000 ppm | 700 ppm | 0 | 2000 ppm | 700 ppm |
| Ex. 23 | 1600 ppm | 2000 ppm | 700 ppm | 0 | 2000 ppm | 700 ppm |
| Ex. 24 | 2000 ppm | 2000 ppm | 700 ppm | 0 | 2000 ppm | 700 ppm |
| Ex. 25 | 2000 ppm | 2000 ppm | 700 ppm | 0 | 1920 ppm | 700 ppm |
| Ex. 26 | 2000 ppm | 2000 ppm | 700 ppm | 0 | 2000 ppm | 700 ppm |
| Ex. 27 | 2000 ppm | 2000 ppm | 700 ppm | 0 | 1600 ppm | 700 ppm |
| Ex. 28 | 2000 ppm | 2000 ppm | 700 ppm | 0 | 2000 ppm | 700 ppm |
| Ex. 29 | 2000 ppm | 2000 ppm | 700 ppm | 0 | 2000 ppm | 700 ppm |
| Ex. 30 | 2000 ppm | 2000 ppm | 2500 ppm | 0 | 2000 ppm | 1276 ppm |
| Ex. 31 | 2000 ppm | 2000 ppm | 4000 ppm | 0 | 2000 ppm | 1756 ppm |
| Ex. 32 | 2000 ppm | 2000 ppm | 100 ppm | 0 | 2000 ppm | 508 ppm |
| Comp. Ex. 1 | 0 | 2000 ppm | 700 ppm | 0 | 2000 ppm | 700 ppm |
| Comp. Ex. 2 | 0 | 2000 ppm | 700 ppm | 0 | 2000 ppm | 700 ppm |
| Comp. Ex. 3 | 2000 ppm | 2000 ppm | 700 ppm | 2000 ppm | 2000 ppm | 700 ppm |
| Comp. Ex. 4 | 2000 ppm | 1960 ppm | 700 ppm | 2040 ppm | 1960 ppm | 700 ppm |

### 1. Preparation of Film for Heat-fusible Layer

### <Example 1>

Films for the heat-fusible layer 3 of Example 1 in the packaging material 1 for a power storage device were prepared as shown in Tables 1 to 4. In other words, as the films for the heat-fusible layer 3, a 40 µm thick, two-layer co-extruded CPP film was produced by utilizing an rPP film for the seal layer portion (first layer) and another rPP film for the metal foil side layer (third layer) 33.

In the heat-fusible layer film of Example 1, the seal layer portion 31 is an rPP that includes 2,000 ppm of silica particles with an average particle diameter of 0.2 µm (maximum particle size 2 µm) as the micro particles B, 2,000 ppm of HDPE (high-density polyethylenen) beads with an average particle size of 12 µm as the coarse particles A, and 700 ppm of erucicamide as a lubricant, with a thickness of 8 µm.

The metal foil side layer 33 is rPP that includes 2,000 ppm of silica particles with an average particle diameter of 0.2 µm (maximum particle size 2 µm) as micro particles and 700 ppm of erucamide as a lubricant with a thickness of 32 µm.

Note that Table 4 is a table showing the particle size and the lubricant amount based on the actual particle size in the seal layer portion 31 and the metal foil side layer portion 33, and the particle size in Table 4 corresponds to the actual particle size. As shown in Table 4, in the seal layer portion 31, 2,000 ppm of particles with the actual particle size of 5 µm or greater and 2,000 ppm of particles with the actual particle size of less than 5 µm coexist, while in the metal foil side layer portion 33, only 2,000 ppm of particles with the actual particle size of less than 5 µm are present, and no particles with the actual particle size of 5 µm or greater are present.

### (Example 2)

As shown in Table 1 to Table 4, a film for a heat-fusible layer of Example 2 was prepared in the same manner as in Example 1, except that HDPE beads with an average particle diameter of 5 µm (50% content of particles smaller than 5 µm) were added as coarse particles A in the seal layer portion 31. As shown in Table 4, in this film, the average amount of particles with the actual particle size of 5 µm or larger in the inner layer (seal layer portion side) is 1,000 ppm, and the average amount of particles with the actual particle size of less than 5 µm (micro particles B) is 3,000 ppm (1,000 ppm + 2,000 ppm).

### (Example 3)

As shown in Table 1 to Table 4, a film for a heat-fusible layer of Example 3 was prepared in the same manner as in Example 1, except that HDPE beads with an average particle diameter of 12 µm were added by 3,500 ppm as coarse particles A in the seal layer portion 31.

### (Example 4)

As shown in Table 1 to Table 4, a film for a heat-fusible layer of Example 4 was prepared in the same manner as in Example 1, except that HDPE beads with an average particle diameter of 12 µm were added by 1,200 ppm as coarse particles A in the seal layer portion 31.

### (Example 5)

As shown in Table 1 to Table 4, a film for the heat-fusible layer 3 of Example 1 in the packaging material 1 for a power storage device was prepared. That is, as the film for the heat-fusible layer 3, a three-layer co-extruded CPP film was produced by utilizing an rPP film for the seal layer portion (first layer) 31 and a 24 µm thick bPP film for the intermediate layer portion 32, and an rPP film for the metal foil side layer (third layer) 33.

In this heat-fusible layer film of Example 5, the seal layer portion 31 is the same as in Example 1, and the metal foil side layer portion 33 is the same as in Example 1 except for having a thickness of 8 µm. Further, the intermediate layer portion (second layer) 32 contains 2,000 ppm of silica with an average particle diameter of 0.2 µm (maximum particle size of 2 µm) as micro particles B and 700 ppm of erucamide as a lubricant. The heat-fusible layer film of Example 5 was prepared in the same manner as in Example 1, except for the differences mentioned above.

### (Example 6)

As shown in Table 1 to Table 4, a film for a heat-fusible layer of Example 6 was prepared in the same manner as in Example 5, except that HDPE beads (50% content of particles smaller than 5 µm) with an average particle diameter of 5 µm were added as coarse particles A in the seal layer portion 31.

### (Example 7)

As shown in Table 1 to Table 4, a film for a heat-fusible layer of Example 7 was prepared in the same manner as in Example 5 above, except that HDPE beads with an average particle diameter of 18 µm were added as coarse particles A in the seal layer portion 31.

### (Example 8)

As shown in Tables 1 to 4, a film for a heat-fusible layer of Example 8 was prepared in the same manner as in Example 5, except that LLDPE (linear low-density polyethylene) beads (50% content of particles smaller than 5 µm) with an average particle diameter of 5 µm were added as coarse particles A in the seal layer portion 31.

### (Example 9)

As shown in Table 1 to Table 4, a film for a heat-fusible layer of Example 6 was prepared in the same manner as in Example 5, except that silica with an average particle diameter of 0.5 µm (maximum particle size of 3 µm) was added as micro particles B in the seal layer portion 31.

### (Example 10)

As shown in Table 1 to Table 4, a film for a heat-fusible layer of Example 10 was prepared in the same manner as in Example 5, except that HDPE with an average particle diameter of 1 µm (maximum particle size of 4 µm) was added as micro particles B in the seal layer portion 31 and the metal foil side layer 33.

### (Example 11)

As shown in Table 1 to Table 4, a film for a heat-fusible layer of Example 11 was prepared in the same manner as in Example 5, except that LLDPE with an average particle diameter of 1 µm (maximum particle size of 3 µm) was added as micro particles B in the seal layer portion 31 and the metal foil side layer 33.

### (Example 12)

As shown in Table 1 to Table 4, a film for a heat-fusible layer of Example 12 was prepared in the same manner as in Example 5, except that HDPE with an average particle diameter of 12 µm were added by 3,500 ppm as coarse particles A in the seal layer portion 31.

### (Example 13)

As shown in Table 1 to Table 4, a film for a heat-fusible layer of Example 13 was prepared in the same manner as in Example 5, except that HDPE with an average particle diameter of 12 µm was added by 1,200 ppm as coarse particles A in the seal layer portion 31.

### (Example 14)

As shown in Table 1 to Table 4, a film for a heat-fusible layer of Example 14 was prepared in the same manner as in Example 5, except that HDPE with an average particle diameter of 12 µm was added by 6,000 ppm as coarse particles A in the seal layer portion 31.

### (Example 15)

As shown in Table 1 to Table 4, a film for a heat-fusible layer of Example 15 was prepared in the same manner as in Example 5, except that HDPE with an average particle diameter of 12 µm was added by 300 ppm as coarse particles A in the seal layer portion 31.

### (Example 16)

As shown in Table 1 to Table 4, a film for a heat-fusible layer of Example 16 was prepared in the same manner as in Example 5, except that 3,000 ppm of HDPE with an average particle diameter of 12 µm was added as coarse particles A in the seal layer portion 31, 3,000 ppm of silica with an average particle size of 0.2 µm was added as micro particles B, and 3,000 ppm of silica with an average particle size of 0.2 µm was added in the metal foil side layer portion 33.

### (Example 17)

As shown in Table 1 to Table 4, a film for a heat-fusible layer of Example 17 was prepared in the same manner as in Example 5, except that 1,000 ppm of HDPE with an average particle diameter of 12 µm was added as coarse particles A in the seal layer portion 31, 1,000 ppm of silica with an average particle size of 0.2 µm was added as micro particles B, and 1,000 ppm of silica with an average particle size of 0.2 µm was added in the metal foil side layer portion 31.

### (Example 18)

As shown in Table 1 to Table 4, a film for a heat-fusible layer of Example 18 was prepared in the same manner as in Example 5, except that 4,000 ppm of silica with an average particle diameter of 0.2 µm was added as micro particles B in the seal layer portion 31 and the metal foil side layer 33.

### (Example 19)

As shown in Table 1 to Table 4, a film for a heat-fusible layer of Example 19 was prepared in the same manner as in Example 5, except that 300 ppm of silica with an average particle diameter of 0.2 µm was added as micro particles B in the seal layer portion 31 and the metal foil side layer 33.

### (Example 20)

As shown in Table 1 to Table 4, a film for a heat-fusible layer of Example 20 was prepared in the same manner as in Example 5, except that silica with an average particle diameter of 10 µm was added as coarse particles A in the seal layer portion 31.

### (Example 21)

As shown in Table 1 to Table 4, a film for a heat-fusible layer of Example 21 was prepared in the same manner as in Example 5, except that acrylic with an average particle diameter of 14 µm was added as coarse particles A in the seal layer portion 31.

### (Example 22)

As shown in Table 1 to Table 4, a film for a heat-fusible layer of Example 22 was prepared in the same manner as in Example 5, except that LLDPE with an average particle diameter of 12 µm was added as coarse particles A in the seal layer portion 31.

### (Example 23)

As shown in Table 1 to Table 4, a film for a heat-fusible layer of Example 23 was prepared in the same manner as in Example 5, except that for the seal layer portion 31, a 4 µm thick layer containing silica with an average particle diameter of 2 µm (micro particles B) was used, for the metal foil side layer portion 33, a 4 µm thick layer was used, and for the intermediate layer portion 32, a 32 µm thick layer was used.

### (Example 24)

As shown in Table 1 to Table 4, a film for a heat-fusible layer of Example 24 was prepared in the same manner as in Example 5 except that for the seal layer portion 31 and the metal foil side layer portion 33, a 6 µm thick layer was used, a 4 µm thick layer was used (Translator's note: this should be deleted), and for the intermediate layer portion 32, a 28 µm thick layer was used.

### (Example 25)

As shown in Table 1 to Table 4, a film for a heat-fusible layer of Example 25 was prepared in the same manner as in Example 5, except that for the seal layer portion 31, a 16 µm thick layer was used, for the metal foil side layer portion 33 and the intermediate layer portion 32, and a 12 µm thick layer was used.

### (Example 26)

As shown in Table 1 to Table 4, a film for a heat-fusible layer of Example 26 was prepared in the same manner as in Example 5, except that for the seal layer portion 31, a 6 µm thick layer was used, for the metal foil side layer portion 33, a 26 µm thick layer was used, and for the intermediate layer portion 32, an 8 µm thick layer containing 2,000 ppm of HDPE (micro particles A) with an average particle diameter of 10 µm and silica (coarse particles B) with an average particle diameter of 0.2 µm was used.

### (Example 27)

As shown in Table 1 to Table 4, a film for a heat-fusible layer of Example 27 was prepared in the same manner as in Example 26, except that for the seal layer portion 31 and the intermediate layer portion 32, a 10 µm thick layer was used, and for the metal foil side layer portion 33, a 20 µm thick layer was used.

### (Example 28)

As shown in Table 1 to Table 4, a film for a heat-fusible layer of Example 28 was prepared in the same manner as in Example 5, except that for the seal layer portion 31 and the metal foil side layer 33, a 6 µm thick layer was used, and for the intermediate layer portion 32, a 22 µm thick layer was used.

### (Example 29)

As shown in Table 1 to Table 4, a film for a heat-fusible layer of Example 29 was prepared in the same manner as in Example 5, except that for the seal layer portion 31 and the metal foil side layer 33, a 16 µm thick layer was used, and for the intermediate layer portion 32, a 48 µm thick layer was used.

### (Example 30)

As shown in Table 1 to Table 4, a film for a heat-fusible layer of Example 30 was prepared in the same manner as in Example 5, except that 2,500 ppm of lubricant was added to the metal foil side layer portion 33.

### (Example 31)

As shown in Table 1 to Table 4, a film for a heat-fusible layer of Example 31 was prepared in the same manner as in Example 5, except that 4,000 ppm of lubricant was added to the seal layer portion 31 and the metal foil side layer portion 33.

### (Example 32)

As shown in Table 1 to Table 4, a film for a heat-fusible layer of Example 32 was prepared in the same manner as in Example 5, except that 100 ppm of lubricant was added to the seal layer portion 31 and the metal foil side layer portion 33.

### <Comparative Example 1>

As shown in Table 1 to Table 4, a film for a heat-fusible layer of Comparative Example 1 was prepared without adding coarse particles A to the seal layer portion 31, otherwise in the same manner as in Example 1.

### <Comparative Example 2>

As shown in Table 1 to Table 4, a film for a heat-fusible layer of Comparative Example 2 was prepared without adding coarse particles A to the seal layer portion 31, otherwise in the same manner as in Example 5.

### <Comparative Example 3>

As shown in Table 1 to Table 4, a film for a heat-fusible layer of Comparative Example 3 was prepared in the same manner as in Example 5, except that silica (micro particles B) with an average particle diameter of 1 µm was added to the seal layer portion 31 and HDPE (coarse particles A) with an average particle diameter of 12 µm was added to the metal foil side layer portion 33.

### <Comparative Example 4>

As shown in Table 1 to Table 4, a film for a heat-fusible layer of Comparative Example 4 was prepared in the same manner as in Comparative Example 3, except that silica (micro particles B) with an average particle diameter of 3 µm (maximum particle size of 8 µm) was added to the seal layer portion 31. In Comparative Example 4, the actual content of silica (micro particles B) with a particle size of 5 µm or larger was 2%, i.e., the equivalent of 40 ppm silica had a particle size of 5 µm or larger (see "*1" in Table 1).

### 2. Production of Packaging Material for Storage Device

A chemical conversion treatment solution comprising phosphoric acid, polyacrylic acid (acrylic-based resin), a chromium (III) salt compound, water, and alcohol was applied to both sides of a 40 µm thick aluminum foil (A8021-O) as the metal foil layer 4, and then dried at 180°C to form a chemical conversion coating. The chromium adhesion amount of this chemical conversion coating was 10 mg/m² per one side.

Next, a 15 µm thick biaxially stretched 6 nylon (ONy) film as the substrate layer 2 was dry-laminated (adhered) to one side (outer surface) of the above-described chemical conversion-treated aluminum foil (metal foil layer 4) via a two-part curing type urethane-based adhesive agent (3 µm).

Next, the outer surface of the metal foil side layer (third layer) 33 of the CPP film for the heat-fusible layer 3 prepared in the above Examples and Comparative Examples was overlaid on the other side (inner surface) of the aluminum foil (metal foil layer 4) after dry-laminating, via a two-part curing adhesive consisting of maleic acid-modified polypropylene resin and isocyanate (2 µm), and then dry-laminated by pressing between a rubber nip roll and a laminate roll heated to 100°C. Thereafter, they were aged at 40°C for 10 days to obtain packaging materials (laminates) of Examples and Comparative Examples.

**[Table. 5]**

| | Evaluation result | | | |
|---|---|---|---|---|
| | Mouldability | Lamination strength (peel off) | Lubricant deposit amount (µg/cm²) | Appearance |
| Ex. 1 | 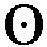 | 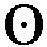 | 0.2 | No abnormality |
| Ex. 2 | 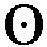 | 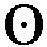 | 0.2 | No abnormality |
| Ex. 3 | 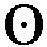 | 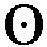 | 0.2 | No abnormality |
| Ex. 4 | 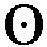 | 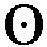 | 0.2 | No abnormality |
| Ex. 5 | 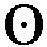 | 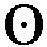 | 0.2 | No abnormality |
| Ex. 6 | 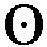 | 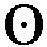 | 0.2 | No abnormality |
| Ex. 7 | 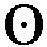 | 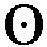 | 0.2 | No abnormality |
| Ex. 8 | 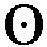 | 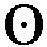 | 0.2 | No abnormality |
| Ex. 9 | 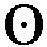 | 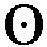 | 0.2 | No abnormality |
| Ex. 10 | 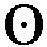 | 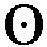 | 0.2 | No abnormality |
| Ex. 11 | 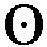 | 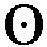 | 0.2 | No abnormality |
| Ex. 12 | 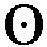 | 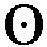 | 0.2 | No abnormality |
| Ex. 13 | 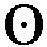 | 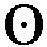 | 0.2 | No abnormality |
| Ex. 14 | 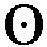 | 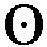 | 0.2 | No abnormality |
| Ex. 15 | ○ | 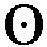 | 0.2 | No abnormality |
| Ex. 16 | 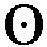 | 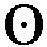 | 0.2 | No abnormality |
| Ex. 17 | 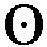 | 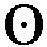 | 0.2 | No abnormality |
| Ex. 18 | 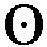 | ○ | 0.2 | No abnormality |
| Ex. 19 | 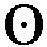 | 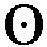 | 0.2 | Particle dropout areas were observed |
| Ex. 20 | 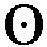 | 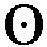 | 0.2 | No abnormality |
| Ex. 21 | 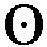 | 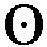 | 0.2 | No abnormality |
| Ex. 22 | 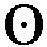 | 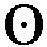 | 0.2 | No abnormality |
| Ex. 23 | ○ | 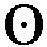 | 0.2 | Particle dropout areas were observed |
| Ex. 24 | 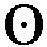 | 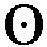 | 0.2 | No abnormality |
| Ex. 25 | 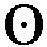 | ○ | 0.2 | No abnormality |
| Ex. 26 | 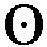 | 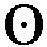 | 0.2 | No abnormality |
| Ex. 27 | 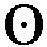 | ○ | 0.2 | No abnormality |
| Ex. 28 | 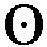 | 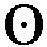 | 0.2 | No abnormality |
| Ex. 29 | 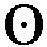 | 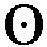 | 0.2 | No abnormality |
| Ex. 30 | 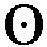 | 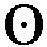 | 0.4 | No abnormality |
| Ex. 31 | 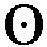 | 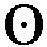 | 0.6 | No abnormality |
| Ex. 32 | 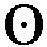 | ○ | 0.05 | No abnormality |
| Comp. Ex. 1 | x | 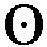 | 0.2 | No abnormality |
| Comp. Ex. 2 | x | 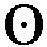 | 0.2 | No abnormality |
| Comp. Ex. 3 | 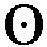 | x | 0.2 | No abnormality |
| Comp. Ex. 4 | 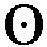 | x | 0.2 | No abnormality |

### 3. Evaluation Tests for Each Packaging Material

### <Moldability Test>

A deep drawing test was conducted on test pieces of the packaging materials, each cut to a predetermined size from Examples and Comparative Examples, using deep drawing dies. The test covered a range of 55 mm in length by 35 mm in width, with the drawing height (drawing depth) increasing in 0.5 mm increments. The gauge pressure at the wrinkle holding pressure during this molding was 0.475 MPa, and the actual pressure (calculated value) was 0.7 MPa.

Visual checking was performed using transmitted light to determine whether pinholes were generated at the corners of the drawn recessed portions due to this molding.

Then, the presence of pinholes was evaluated as follows: " 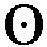 " for those with a forming depth of 7 mm or more without pinholes, "o" for those with a forming depth of 5 mm or more but less than 7 mm without pinholes, and "×" for those with a forming depth of less than 5 mm where pinholes were observed. The results are shown in Table 5.

### <Lamination Strength Test>

Each packaging material of Examples and Comparative Examples was cut into strips of 15 mm width, and the peel strength between the metal foil layer 4 and the heat-fusible layer 3 was measured according to JIS K6854-3 (1999). The peel strength was evaluated as " 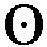 " if it was 3.0 N/15 mm or more, "o" if it was 2.0 N/15 mm or more and less than 3.0 N/15 mm, and "×" if it was less than 2.0 N/15 mm. The results are shown in Table 5.

### <Test for Lubricant Precipitation Amount>

In each of the packaging materials of Examples and Comparative Examples, both ends were sealed to produce a bag-shaped sample with an interior dimension of 10 cm by 10 cm. 1 ml of acetone was placed in the bagged sample and left for 3 minutes in a state in which the acetone was made contact with the inner surface of the bagged sample, and then the acetone was extracted. The lubricant amount precipitated on the interior surface (inner side of the heat-fusible layer) of each packaging material was calculated by measuring the concentration of the lubricant contained in the extracted acetone using gas chromatography. The results are shown in Table 5.

### <Observational Test>

Each of the packaging materials of Examples and Comparative Examples was cut into 15 cm (length) by 20 cm (width) pieces, and the interior surfaces of both end portions and the center portion on the heat-fusible layer side in each cut piece were observed under a microscope. The microscope was a Keyence VHX-5000 with a magnification of "×500." This observation was then used to confirm the presence or absence of abnormalities. The results are shown in Table 5.

### <Overall Review>

As shown in Table 5, the packaging materials of Examples 19 and 23 exhibited particle loss in the observation test; however, all other Examples received mostly favorable evaluations in each test.

In contrast, in the packaging materials of Comparative Examples 1 to 4, which were outside the gist of the present invention, the evaluation of either moldability or laminate strength was inferior.

This application claims priority to Japanese Patent Application No. 2021-183860, filed on November 11, 2021, the disclosure of which is incorporated herein by reference in its entirety.

It must be recognized that the terms and expressions used herein are for illustrative purposes only, are not to be construed as limiting, do not exclude any equivalents of the features shown and described herein, and allow for various variations within the claimed scope of this invention. It must be recognized that the present invention does not exclude any equivalents of the features shown and described herein, but permits various variations within the claimed scope of the invention.

### Industrial Applicability

A packaging material for a power storage device of the present invention is suitable for use in producing power storage devices, such as batteries and capacitors, used in mobile devices, such as smartphones and tablets, as well as in hybrid vehicles, electric vehicles, wind power generation, solar power generation, and for storing nighttime electricity.

### Description of Reference Symbols

- 1:: Packaging material
10: Lid member (Packaging material)
14: Tray member (Packaging material)
15: Packaging case (Packaging material)
- 2:: Substrate layer
- 3:: Heat-fusible layer
30. Power storage device
31: Seal layer portion
32: Intermediate layer portion
33: Metal foil side layer
35: Device main body
- 4:: Metal foil layer
- 5:: Adhesive layer
- 6:: Lubricant Layer
- A:: Coarse particles
- B:: Micro particles
- T1:: Thickness of the seal layer portion
- T3:: Thickness of the metal foil side layer

## Claims

1. A packaging material for a power storage device, comprising:
a metal foil layer;
a substrate layer made of resin, the substrate layer being provided on an outer side of the metal foil layer;
an adhesive layer provided on an inner surface side of the metal foil layer; and
a heat-fusible layer made of heat-fusible resin, the heat-fusible layer being provided on an inner surface side of the adhesive layer,
wherein the heat-fusible layer includes a metal foil side layer portion adhered to the adhesive layer and a seal layer portion arranged on an innermost surface,
wherein when particles with an average particle size of 0.05 µm or more and less than 5 µm are defined as "micro particles," and particles with an average particle size of 5 µm or more and 20 µm or less are defined as "coarse particles," the seal layer portion is configured by a layer containing the micro particles and the coarse particles, and
wherein the metal foil side layer portion is configured by a layer that contains the micro particles and does not contain particles with an actual particle size of 5 µm or more.

2. The packaging material for a power storage as recited in claim 1,
wherein the seal layer portion is 5 µm or more in thickness.

3. The packaging material for a power storage as recited in claim 1 or 2,
wherein the seal layer portion is 200 ppm to 5,000 ppm in content of the coarse particles and 500 ppm to 3,500 ppm in content of the micro particles.

4. The packaging material for a power storage as recited in any one of claims 1 to 3,
wherein the metal foil side layer portion is 500 ppm to 3,500 ppm in content of the micro particles.

5. The packaging material for a power storage as recited in any one of claims 1 to 4,
wherein the seal layer portion contains a lubricant.

6. The packaging material for a power storage as recited in any one of claims 1 to 5,
wherein the coarse particles are composed of resin beads, and the micro particles are composed of any one or more of silicon oxide, aluminum oxide, and titanium oxide.

7. A power storage device comprising:
a power storage device main body; and
the packaging material for a power storage as recited in any one of claims 1 to 6,
wherein the power storage device main body is packaged with the packaging material.
